# EUROPÄISCHE PATENTSCHRIFT

(11) **EP 2 996 478 B1**
(45) Veröffentlichungstag und Bekanntmachung des Hinweises auf die Patenterteilung: **11.04.2018**
(21) Anmeldenummer: 14724458.6
(22) Anmeldetag: 16.05.2014
(51) Int. Cl.: A21C 9/08, B65G 39/12

(54) **VORRICHTUNG ZUM TRANSPORT VON IM WESENTLICHEN BIEGESCHLAFFEN FORMKÖRPERN**
DEVICE FOR TRANSPORTING ESSENTIALLY NON-RIGID MOULDED BODIES
DISPOSITIF DE TRANSPORT DE CORPS MOULÉS ESSENTIELLEMENT PEU RÉSISTANTS À LA FLEXION

(30) Priorität: 17.05.2013 AT 4142013
(43) Veröffentlichungstag der Anmeldung: 23.03.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Christoph, Curitiba-Paraná (BR); JIRASCHEK, Stefan, A-2202 Königsbrunn (AT)
(74) Vertreter: Puchberger & Partner Patentanwälte
(86) Internationale Anmeldenummer: PCT/EP2014/060054
(87) Internationale Veröffentlichungsnummer: WO 2014/184335

(56) Entgegenhaltungen:
- EP-A1- 0 548 661
- DE-A1-102010 001 969

## Beschreibung

Die Erfindung betrifft eine Vorrichtung zum Transport von im Wesentlichen biegeschlaffen Formkörpern oder endlosen Teigbändern, wie insbesondere Keksteig-Formkörper und dergleichen, umfassend ein Maschinengestell, ein geschlossenes umlaufendes Transportband, eine Umlenkrolle, welche das Transportband zur Umlenkung auf der Innenseite berührt und deren Umlenkachse seitlich am Maschinengestell rotatorisch gelagert ist, eine Antriebsrolle, welche das Transportband zum Antrieb auf der Innenseite berührt und deren Antriebswelle seitlich am Maschinengestell rotatorisch gelagert und von einem Antrieb angetrieben ist.

Vorrichtungen zum Transport von Teigbändern, beispielsweise zur Zuführung zu einer Auswalz- oder Ausstechvorrichtung für Keksteig-Formkörper, sind seit langer Zeit bekannt.
Bei diesen herkömmlichen Vorrichtungen wird ein endloses Transportband um mehrere Umlenkrollen geführt und über zumindest eine Antriebsrolle angetrieben.
Gegebenenfalls wird das Transportband über eine Übergabekante eines Übergabemessers scharf umgelenkt, um die Übergabe auf ein weiteres Modul einer Produktionslinie für Backprodukte zu ermöglichen.

Insbesondere bei der industriellen Herstellung von Lebensmittelprodukten und Backprodukten sind gleichbleibende Qualität, Hygiene und möglichst unterbrechungsfreier Betrieb der Maschinen von großer Wichtigkeit. Zur Gewährleistung der hohen Qualität und der Hygiene muss das Transportband in regelmäßigen Abständen entnommen und gegebenenfalls gewechselt werden. Dazu muss bei dem Stand der Technik entsprechenden Vorrichtungen die Maschine angehalten werden. In weiterer Folge werden die Lagerböcke der Lagerungen der einzelnen Walzen bzw. Rollen am Maschinengestell geöffnet. Dann erst können die Rollen entfernt werden, wobei die Rotationslager auf den Wellenzapfen verbleiben. Bei herkömmlichen Vorrichtungen müssen darüber hinaus auch der Antrieb und gegebenenfalls das Getriebe des Antriebs entfernt werden, da andererseits das Transportband nicht aus der Vorrichtung entnommen werden kann.

Dies ist ein zeitaufwendiger Vorgang, während dem die gesamte Produktionslinie angehalten werden muss.

Herkömmliche Vorrichtung sind beispielsweise aus der EP 0 548 661 A1 und der DE 10 2010 001 969 A1 bekannt.

Aus der angeführten EP 0 548 661 A1, ist eine Bandfördereinrichtung bekannt, die zum einfachen Wechseln des umlaufenden Förderbands eine schwenkbare Fördereinheit aufweist. Die Förderrollen sind zwischen Seitenteilen angeordnet und beidseitig in den Seitenteilen drehbar gelagert. Beim Ausschwenken wird die angetriebene Förderrolle vom Antrieb durch eine Kupplung entkoppelt. Aus der angeführten DE 10 2010 001 969 A1, ist eine Fördereinrichtung bekannt, wobei eine Spannrolle durch eine Klemmvorrichtung und Klemmelemente werkzeuglos einstellbar und fixierbar ist. Die Antriebsrolle ist bei dieser Vorrichtung nicht schwenkbar ausgeführt sondern an den Seitenholmen festgelagert.

Aufgabe der Erfindung ist es, eine Vorrichtung zum Transport von im Wesentlichen biegeschlaffen Formkörpern zu schaffen, die eine rasche, unkomplizierte und saubere Entnahme oder Wechselbarkeit des Transportbandes ermöglicht.

Die erfindungsgemäße Aufgabe wird durch eine Vorrichtung nach Anspruch 1 gelöst. Ferner ist es für die Erfindung von Vorteil, wenn alle weiteren Komponenten der Vorrichtung entfernbar sind, die sich im Inneren des Transportbands befinden. Beispiele für derartige Komponenten sind Umlenkrollen, Übergabekörper und/oder Tischbleche. Weitere vorteilhafte Merkmale der Erfindung sind, dass die Schwenkvorrichtung eine lösbare Lagervorrichtung für die erste Lagerstelle der Antriebswelle und ein schwenkbares Schwenklager für die zweite Lagerstelle der Antriebswelle im Maschinengestell umfasst, sodass ein Schwenken der Antriebswelle und der Antriebsrolle gegenüber dem Maschinengestell ermöglicht ist, dass das Schwenklager einen Schwenklagerbock umfasst, in welchem ein Radiallager zur Lagerung der Antriebswelle vorgesehen ist, dass das Schwenklager über eine Schwenkachse mit dem Maschinengestell verbunden ist, sodass der Schwenklagerbock und die darin gelagerte Antriebswelle schwenkbar sind, dass die Richtung der Schwenkachse von der Richtung der Drehachse der Antriebswelle abweicht und insbesondere im Wesentlichen normal zur Drehachse der Antriebswelle verläuft, dass der Antrieb eine Ausgangswelle umfasst, die mit der Antriebswelle drehverbunden ist, dass der Antrieb ein Gehäuse umfasst, das im Wesentlichen starr mit dem Schwenklagerbock verbunden ist und/oder dass die Lagerstellen der Umlenkrolle jeweils als lösbare Lagervorrichtungen ausgeführt sind.

Ferner kann vorgesehen sein, dass die lösbare Lagervorrichtung der Umlenkrolle einen Umlenkrollenlagerbock und ein Verriegelungselement umfasst, wobei der Umlenkrollenlagerbock eine im Wesentlichen in radialer Richtung verlaufende Öffnung zum Einlegen und Entfernen der Umlenkachse oder der Antriebswelle aufweist, die durch das Verriegelungselement verschließbar ist, dass die Breite der Öffnung des Umlenkrollenlagerbocks größer ist als der Durchmesser der gelagerten Umlenkachse, dass das Verriegelungselement über ein Betätigungselement bewegbar ist, wobei das Betätigungselement insbesondere als werkzeuglos bedienbares Betätigungselement, als Hebel, als Riegel oder als Schieber ausgeführt ist, dass eine Spannrolle vorgesehen ist, die zur Spannung des Transportbandes an die Außenseite des Transportbandes gedrückt ist und/oder dass ein Übergabemesser vorgesehen ist, das eine Übergabekante aufweist, um die das Transportband umgelenkt ist.

In bevorzugter Weise kann auch vorgesehen sein, dass das Übergabemesser über eine Übergabemesserschwenkachse schwenkbar mit dem Maschinengestell verbunden ist, dass das Übergabemesser seitlich mit dem Maschinengestell verbunden ist, wobei die Verbindung lösbar ausgeführt ist, sodass das Übergabemesser entfernbar ist, dass alle Umlenkrollen und das Übergabemesser und gegebenenfalls Tischbleche entfernbar mit dem Maschinengestell verbunden sind und dass die Antriebsrolle schwenkbar mit dem Maschinengestell verbunden ist, sodass das endlose, geschlossene Transportband ohne Demontage des Antriebs wechselbar ist, dass die lösbare Lagervorrichtung der Antriebsrolle eine Ausnehmung in der Seitenplatte des Maschinengestells umfasst, die über eine radial verlaufende Öffnung nach außen geöffnet ist,
dass das Verriegelungselement der Antriebsrolle drehbar angeordnet ist,
dass eine Breite des Verriegelungselements kleiner ist als die Breite der Öffnung und dass eine weitere Breite des Verriegelungselements breiter ist als die Öffnung jedoch kleiner als die Ausnehmung, sodass das Verriegelungselement in der Ausnehmung positionierbar und durch Verdrehen arretierbar ist und/oder dass die Antriebsrolle, deren in dem Radiallager gelagerte Antriebswelle, der Schwenklagerbock sowie der Antrieb samt Gehäuse über die Schwenkachse schwenkbar gegenüber dem Maschinengestell angeordnet sind. Die unterschiedlichen Breiten werden bevorzugt in radialer Richtung der Antriebsrolle oder der Drehachse des Betätigungselements gemessen.

Um das Transportband zu entfernen, sollen grundsätzlich alle innerhalb des Transportbandes angeordneten Elemente derart ausgeführt sein, dass sie entweder entfernbar sind oder zumindest schwenkbar sind, sodass das Transportband seitlich entnommen werden kann. Gemäß der Erfindung sind die Umlenkrollen entfernbar ausgeführt. Zu diesem Zweck sind Schnellverschlüsse vorgesehen, durch welche die Rollen entriegelt werden können. Das gegebenenfalls angeordnete Übergabemesser ist ebenfalls entfernbar ausgeführt.

Der Antrieb, der bevorzugt direkt mit der Antriebswelle der Antriebsrolle verbunden ist, kann aufgrund des erhöhten Gewichtes und der Verbindung mit dem Maschinengestell nicht über Schnellverschlüsse entriegelt werden. Aus diesem Grund ist erfindungsgemäß die Antriebsrolle über eine Schwenkvorrichtung schwenkbar mit dem Maschinengestell verbunden. Insbesondere ist diese Schwenkbarkeit derart ausgeführt, dass jene Seite der Antriebsrolle, die nicht mit dem Antrieb verbunden ist, verschwenkt werden kann, sodass ihr freies Ende seitlich in einen freien Bereich des Maschinengestells ragt. Dadurch kann das Transportband seitlich über das verschwenkte Ende der Antriebsrolle gezogen werden und durch den freien Bereich des Maschinengestells aus der Vorrichtung entfernt werden.

Die genannten Schnellverschlüsse sind als lösbare Lagervorrichtungen ausgeführt. Die lösbaren Lagervorrichtungen der Umlenkrollen sind bevorzugt als Lagerböcke ausgeführt, die jeweils eine Öffnung aufweisen, welche über ein Verriegelungselement verschließbar ist. Die Öffnungen sind derart ausgeführt, dass die Achsen in im Wesentlichen radialer Richtung aus dem Lagerbock entfernt werden können. Beispielsweise ist dies durch eine radial verlaufende Nut ermöglicht. Das Verriegelungselement ist derart ausgeführt, dass die Öffnung geschlossen werden kann, sodass die Rolle bzw. deren Achse in ihrer gelagerten Position fixiert ist. Zur Entfernung der Umlenkrollen werden die Verriegelungselemente der lösbaren Lagervorrichtungen gelöst und die Rollen im Wesentlichen in radialer Richtung entnommen.

Auch das Übergabemesser kann in bevorzugter Weise entnommen werden. Dazu weist es eine Drehachse auf, um die das Übergabemesser geschwenkt werden kann. Die Drehachse steht im Wesentlichen normal zu der Transportrichtung des Transportbandes oder parallel zu den Drehachsen der Rollen. In Betriebsstellung wird das Übergabemesser durch die Bandspannung in einer ersten Position gehalten. In dieser Position kann das Übergabemesser auch über Verbindungselemente, wie beispielsweise Knebelschrauben, starr mit dem Maschinengestell verbunden sein. Zur Entfernung des Übergabemessers kann das Übergabemesser hochgeklappt werden. Durch dieses Klappen wird einerseits das Transportband entlastet und andererseits ist die Entnahme des Übergabemessers erleichtert. Insbesondere kann die Lagerung des Übergabemessers seitlich am Maschinengestell gelöst werden. Dadurch kann das Übergabemesser aus den Befestigungsstellen gezogen und aus der Vorrichtung entnommen werden.

Bevorzugt sind zur Unterstützung des Transportbandes Tischbleche vorgesehen. Diese Tischbleche sind seitlich mit dem Maschinengestell verbunden und folgen im Wesentlichen dem Verlauf des Transportbandes. Die Tischbleche sind über einfache, bevorzugt lösbare Verbindungsmittel mit dem Maschinengestell verbunden. Dies ermöglicht eine rasche Entnahme der Tischbleche.

Sind nun die Umlenkrollen, die Tischbleche und das Übergabemesser entfernt, so ist im Inneren des Transportbandes lediglich die Antriebsrolle vorgesehen. Um das Transportband entnehmen zu können, wird nun die Antriebsrolle geschwenkt. Dazu wird auf einer Seite die lösbare Lagervorrichtung gelöst. Auf der anderen Seite der Antriebswelle ist die erfindungsgemäße Schwenkvorrichtung vorgesehen. Durch Lösen der Lagervorrichtung kann die Antriebsrolle verschwenkt werden. Diese Schwenkbewegung wird durch die Schwenkvorrichtung ermöglicht. Beim Schwenken der Antriebsrolle werden einerseits die Antriebsrolle selbst, aber auch der Antrieb und die zwischen Antrieb und Antriebswelle sitzenden Komponenten mitgeschwenkt. Dazu umfasst die Schwenkvorrichtung einen Schwenklagerbock, der gegenüber dem Maschinengestell um eine Schwenkachse schwenkbar angeordnet ist. Der Antrieb bzw. das Gehäuse des Antriebs sind mit diesem Schwenklagerbock starr verbunden. Dadurch wird bei Schwenken der Antriebswelle bzw. der Antriebsrolle der Antrieb mitgeschwenkt. Eine Trennung der Antriebswelle und des Antriebes zur Entnahme des Transportbandes ist nicht notwendig.

Die lösbare Lagervorrichtung der Antriebsrolle umfasst ebenfalls ein Verriegelungselement. Durch dieses Verriegelungselement wird die Verbindung zwischen Antriebsrolle und Maschinengestell gelöst und die Welle kann verschwenkt werden. Insbesondere ist die Antriebsrolle derart schwenkbar ausgeführt, dass sie mit ihrem freien Ende in eine Richtung zeigt, in der sie frei zugänglich ist. Dadurch kann das Transportband über das frei auskragende Ende der Antriebswelle gezogen werden.

Die lösbare Lagervorrichtung der Antriebswelle ist ferner derart ausgeführt, dass die Radiallager mit der Lagervorrichtung mitgeschwenkt werden. Sie müssen somit nicht entfernt und auch nicht geöffnet werden. Dies hat den großen Vorteil, dass Verschmutzungen wie Abrieb oder Schmiermittel der Radiallager nicht austreten können. Gleiches gilt für die Antriebsseite der Antriebswelle. Dort bleibt der Antrieb mit der Welle in einem festen Verbund. Ein Öffnen von Lagerböcken im herkömmlichen Sinn ist ebenfalls nicht notwendig.

Die Schnellverschlüsse für die Umlenkrollen und insbesondere die Lagerstellen sind bevorzugt derart ausgeführt, dass keine Kontaminierung durch Öl oder Abrieb geschehen kann. Gemäß einer Ausführungsform ist die Umlenkrolle als zylindrischer Körper ausgeführt, aus welchem ein Achszapfen ragt, der gegenüber der zylindrischen Rolle drehbar in der Rolle gelagert ist. Dazu kann beispielsweise in der Umlenkrolle ein Kugellager eingepresst oder vorgesehen sein. Im Inneren dieses Kugellagers ist dann der Achszapfen gelagert. Bevorzugt ist der Achszapfen zylindrisch ausgeführt und ragt in den erfindungsgemäßen Schnellverschluss. Gegebenenfalls ist die Walze rohrförmig ausgebildet und hat in ihrem Inneren einen Hohlraum. Die beidseitig auskragenden Achszapfen können durch eine starre Achse miteinander verbunden sein oder als Achse ausgeführt sein. Diese starre Achse erstreckt sich von der linksseitigen Lagerung bis zur rechtsseitigen Lagerung. Die Walze ist auf dieser beidseitig über Radiallager drehbar gelagert. Bevorzugt weisen die Achse umfassend die beiden Achszapfen und die Umlenkrolle, die insbesondere rohrförmig ausgebildet ist, dieselbe Rotationsachse auf.

Die Achszapfen können gegebenenfalls auch polygonförmig ausgeführt sein. Die polygonförmigen Achszapfen können in komplementären, polygonförmigen Ausnehmungen am Maschinengestell gehaltert oder gelagert sein.

Zur Verbesserung der Klarheit wird definiert, dass als Lagerbock eine Vorrichtung bezeichnet ist, die zur Halterung von Lagern, insbesondere Rotationslagern, eingerichtet ist. Dabei muss der Lagerbock nicht im herkömmlichen Sinn als zweiteilige, trennbare Anordnung ausgeführt sein, sondern kann beispielsweise auch als Hülse, Ring, öffenbarer Ring oder als anderer Körper ausgeführt sein, der dazu geeignet ist, die Lagerstellen oder das Lager zur Lagerung einer Welle oder einer Achse zu ermöglichen.
Die erfindungsgemäße Vorrichtung ist dazu geeignet und/oder eingerichtet, "in-line" in einer industriellen Fertigungsanlage für Lebensmittelprodukte verwendet zu werden.
In weiterer Folge wird die Erfindung anhand der Figuren weiter beschrieben.
Fig. 1 zeigt eine schematische Seitenansicht einer erfindungsgemäßen Vorrichtung, wobei Teile des Maschinengestells ausgeblendet sind.
Fig. 2 zeigt eine Ansicht der erfindungsgemäßen Vorrichtung, wobei das Transportband ausgeblendet ist.
Fig. 3 zeigt eine Schnittdarstellung, die im Wesentlichen der Vorrichtung aus Fig. 2 entspricht - wobei die Antriebsrolle verschwenkt ist.
Fig. 4 zeigt eine Detailansicht der Lagervorrichtung der Antriebsrolle.
Fig. 5 zeigt dieselbe Ansicht wie Fig. 4, jedoch mit verschwenkter Antriebsrolle.
Fig. 6 zeigt eine Detailansicht des Schwenklagers 13 der Vorrichtung.
Fig. 7 zeigt dieselbe Ansicht wie Fig. 6, jedoch in verschwenkter Stellung.
Fig. 8 zeigt eine Schnittdarstellung und insbesondere einen Detailausschnitt einer Schnittdarstellung der Schwenkvorrichtung.
Fig. 9 zeigt eine Lagervorrichtung einer Umlenkrolle in geöffnetem Zustand.
Fig. 10 zeigt dieselbe Anordnung wie Fig. 9, jedoch in geschlossenem Zustand.
Fig. 11 zeigt eine Schrägansicht eines Details der Vorrichtung, wobei sich das Übergabemesser in Betriebsstellung befindet.
Fig. 12 zeigt dieselbe Ansicht wie Fig. 11, jedoch mit hochgeklapptem Übergabemesser.

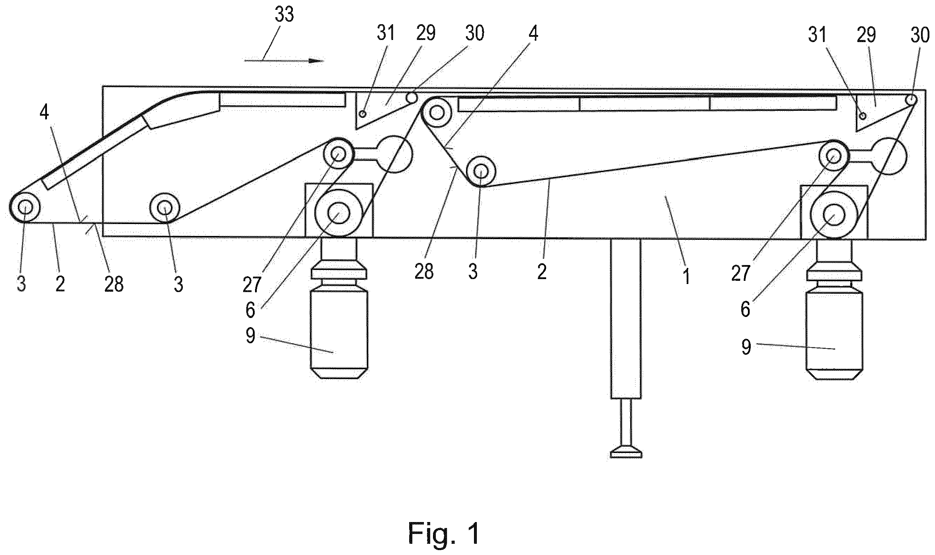

Fig. 1 zeigt eine Seitenansicht einer erfindungsgemäßen Vorrichtung mit einem Maschinengestell 1, das beispielsweise zwei starr miteinander verbundene Seitenplatten umfasst, welche über Querträger miteinander verbunden sind. Ferner sind, wenn die Vorrichtung selbststehend ausgeführt ist, mehrere Füße zur Abstützung gegenüber dem Boden vorgesehen. Bevorzugt ist die erfindungsgemäße Vorrichtung "in-line" in einer Produktionslinie zur industriellen Herstellung von Backprodukten vorgesehen. Gegebenenfalls ist das Maschinengestell somit mit weiteren Komponenten, wie beispielsweise einer Ausstechvorrichtung, einer Auswalzvorrichtung, einem Backofen oder ähnlichen Komponenten, verbunden.
Bei der vorliegenden Ausführungsform sind zwei Transportbänder 2 vorgesehen. Die Transportbänder 2 sind jeweils um eine oder mehrere Umlenkrollen 3 sowie jeweils um zumindest eine Antriebsrolle 6 geführt. Ferner ist das Band bevorzugt um eine Spannrolle 27 und um ein Übergabemesser 29 geführt. Die Umlenkrollen sowie die Antriebsrollen berühren das Transportband 2 in bevorzugter Weise an dessen Innenseite 4. Die Spannrolle 27 berührt das Transportband in der vorliegenden Ausführungsform an dessen Außenseite 28. Über die Antriebsrolle 6 wird das umlaufende Transportband 2 angetrieben. Dabei folgt der in der Darstellung obere Bereich des Transportbandes der Transportrichtung 33. Auf dieser Seite können die zu bearbeitenden und zu fördernden Formkörper entlang der Förderrichtung 33 bewegt werden.

Zum Antrieb der Antriebsrollen 6 ist jeweils ein Antrieb 9 vorgesehen. Dieser ist bevorzugt als Drehantrieb ausgebildet, der mit der Antriebswelle 8 der Antriebsrolle 6 gekoppelt ist. In der Ausführungsform der Fig. 1 sind zwei Transportbänder 2 aneinander gereiht. Es entspricht jedoch ebenfalls dem Erfindungsgedanken, dass nur ein einziges Transportband oder aber auch mehrere Transportbänder vorgesehen sind.

Das Übergabemesser 29 weist eine scharfe Übergabekante 30 auf, um welche das Transportband umgelenkt ist. Ferner umfasst das Übergabemesser 29 in bevorzugter Weise eine Übergabemesserschwenkachse 31, über welche das Übergabemesser schwenkbar ist. Auch das Übergabemesser 29 berührt das Transportband 2 an dessen Innenseite 4.

Ferner sind im Verlauf des Transportbandes Tischbleche 37 vorgesehen. Diese Tischbleche sind beispielsweise über beidseitig auskragende Bolzen mit dem Maschinengestell 1 verbunden. Bevorzugt sind die Tischbleche mit einfachen, dem Stand der Technik entsprechenden Mitteln mit dem Maschinengestell verbunden. Diese Mittel sind derart ausgestaltet, dass eine Entnahme, bevorzugt eine werkzeuglose Entnahme, der Tischbleche aus dem Maschinengestell 1 ermöglicht ist. Die Tischbleche folgen bevorzugt im Wesentlichen der Transportrichtung 33. Sie dienen hauptsächlich der Unterstützung des Transportbandes 2 zum Transport der Teigbänder oder der im Wesentlichen biegeschlaffen Formkörper.

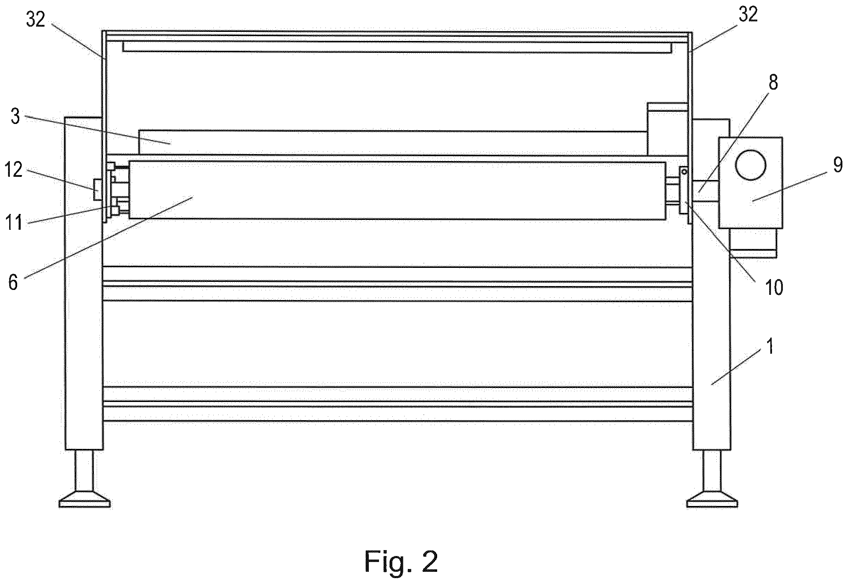

Fig. 2 zeigt eine Ansicht einer erfindungsgemäßen Vorrichtung, wobei das Transportband 2 ausgeblendet ist. Die Bildebene entspricht im Wesentlichen einer Normalebene des in Fig. 1 dargestellten Vektors der Transportrichtung 33. An dem Maschinengestell 1 sind mehrere Rollen sowie das Übergabemesser 29 vorgesehen. Die Umlenkrollen 3 sowie die Antriebsrolle 6 sind seitlich am Maschinengestell 1 gelagert. Die Antriebsrolle 6 ist über eine erste Lagervorrichtung 11 an der ersten Lagerstelle 12 gelagert. Erfindungsgemäß ist diese Lagervorrichtung 11 als lösbare Lagervorrichtung ausgeführt. Auf der anderen Seite der Antriebsrolle 6 ist die Schwenkvorrichtung 10 vorgesehen. An der Schwenkvorrichtung 10 ist einerseits der Antrieb 9 befestigt. Andererseits ist in der Schwenkvorrichtung 10 die Antriebsrolle 6 bzw. die Antriebswelle 8 gelagert.

In Betriebsstellung verlaufen die Drehachsen der einzelnen Rollen im Wesentlichen waagrecht. Das Maschinengestell 1 umfasst zwei Seitenplatten 32, in welchen die Lagerstellen für die Lagerung der Rollen vorgesehen sind. In der dargestellten Stellung der Fig. 2 sind somit alle Rollen sowie auch das nicht dargestellte Transportband 2 seitlich durch die Seitenplatten 32 abgedeckt.

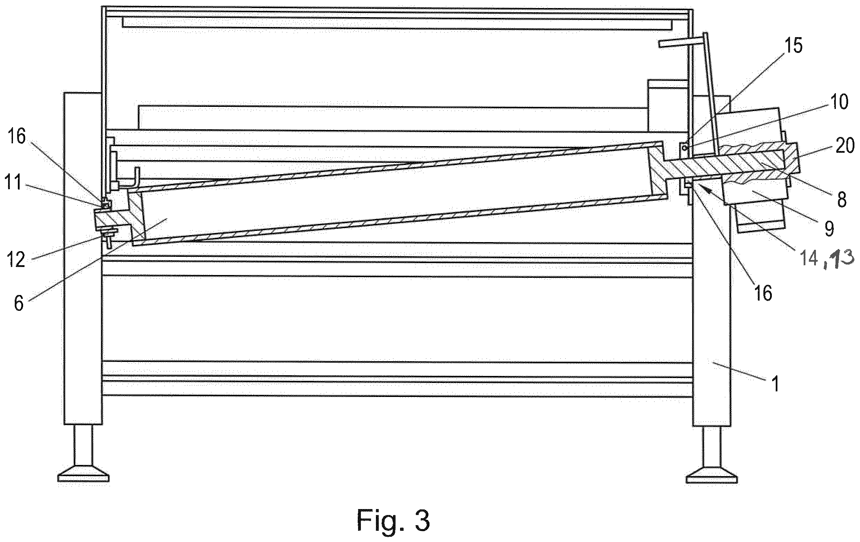

Fig. 3 zeigt eine Vorrichtung, die im Wesentlichen der Vorrichtung der Fig. 2 entspricht. Jedoch ist die Darstellung der Fig. 3 eine Schnittdarstellung, wobei die Schnittebene im Wesentlichen der Mittel- oder Drehachse der Antriebsrolle 6 folgt. Ferner ist die Antriebsrolle 6 in einer verschwenkten Stellung dargestellt. Dabei ist analog zu Fig. 2 das Transportband 2 ausgeblendet. Wiederum umfasst die Vorrichtung ein Maschinengestell 1, an welchem die Umlenkrollen 3 beidseitig gelagert sind.

Die Antriebsrolle 6 ist einseitig mit dem Antrieb 9 bzw. der Antriebswelle 8 verbunden. Die Antriebswelle 8 ist durch die Schwenkvorrichtung 10 geführt und dort an einer zweiten Lagerstelle 14 gelagert. Die erste Lagerstelle 12, die auf der anderen Seite der Antriebsrolle 6 liegt, befindet sich im Bereich der lösbaren Lagervorrichtung 11. In der Darstellung der Fig. 3 ist die Lagervorrichtung 11 derart gelöst, dass die Antriebsrolle 6 aus der Seitenplatte 32 entfernt werden kann. In der Lagervorrichtung 11 ist ein Radiallager 16 vorgesehen, das zur Radiallagerung der Antriebsrolle 6 eingerichtet ist. Auch im Schwenklager 13 ist ein Radiallager 16 vorgesehen, das in einem Schwenklagerbock 15 angeordnet ist. Der Antrieb 9 bzw. dessen Gehäuse 20 ist mit dem Schwenklagerbock 15 verbunden. Beim Ausschwenken der Antriebsrolle 6 werden somit der Schwenklagerbock, der damit verbundene Antrieb 9, das darin vorgesehene Radiallager 16 sowie die Antriebswelle 8 verschwenkt.

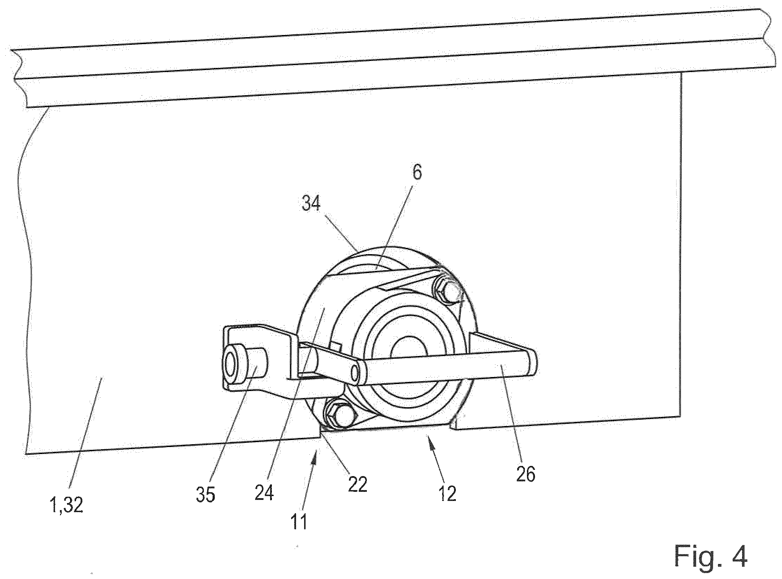

Fig. 4 zeigt eine Ansicht der Lagervorrichtung 11 der Antriebsrolle 6. Wie in den vorangegangenen Figuren umfasst das Maschinengestell 1 zumindest eine, bevorzugt zwei Seitenplatten 32. In dem Maschinengestell 1 sind die Umlenkrollen 3 sowie die Antriebsrolle 6 gelagert und mit dem Maschinengestell verbunden. Die Ansicht zeigt die erste Lagerstelle 12, die als lösbare Lagervorrichtung 11 ausgeführt ist. Dazu weist das Maschinengestell eine im Wesentlichen kreisförmige Ausnehmung 34 auf, in welcher das Verriegelungselement 24 angeordnet ist und gegebenenfalls ver- oder entriegelt werden kann. Die Ausnehmung 34 weist eine in etwa radial verlaufende Öffnung 22 auf. Die Öffnung 22 weist eine geringere Größe auf als der größte Durchmesser der Ausnehmung 34. Das Verriegelungselement 24 ist drehbar angeordnet. Es ist ferner derart ausgestaltet, dass eine Breite des Verriegelungselements kleiner ist, als die Breite der Öffnung 22. Eine weitere Breite des Verriegelungselements 24 ist breiter als die Öffnung 22, jedoch kleiner als die Ausnehmung 34. Dadurch kann das Verriegelungselement in der Ausnehmung 34 positioniert und durch Verdrehen arretiert werden. Durch Drehung des Verriegelungselements in eine Position, in der die schmale Breite durch die Öffnung 22 geführt werden kann, kann die Antriebsrolle 6 verschwenkt werden. In der Darstellung ist die Lagervorrichtung 11 arretiert. Ferner weist die Verriegelungsvorrichtung ein Betätigungselement, wie beispielsweise einen dargestellten Bügelgriff, auf. Darüberhinaus kann das Verriegelungselement blockiert werden. Dies geschieht in der vorliegenden Ausführungsform über die Blockiervorrichtung 35. Diese ist mit dem Maschinengestell 1 verbunden und weist einen Fortsatz auf, über welchen eine Verdrehung des Verriegelungselements 24 verhindert werden kann.

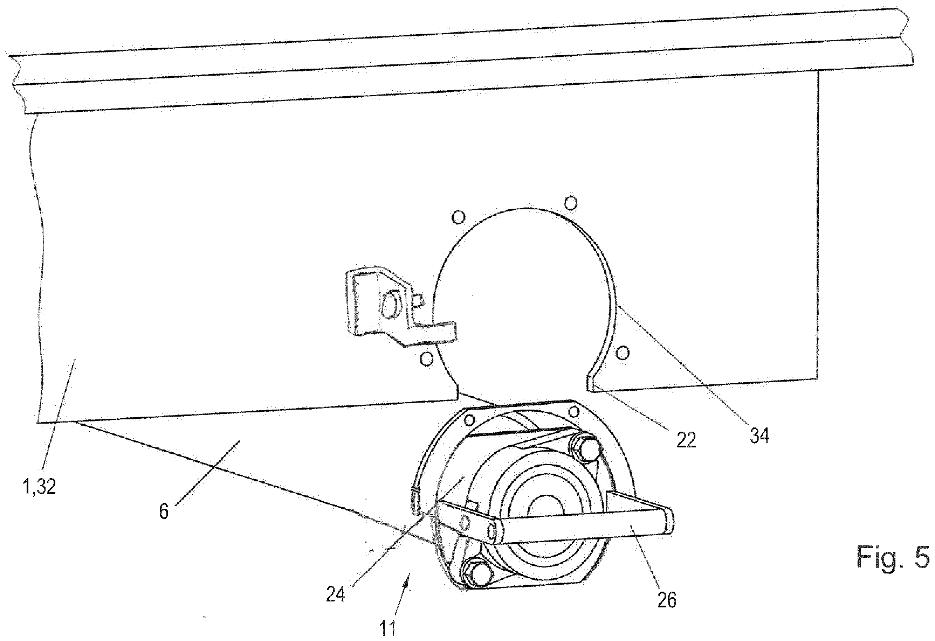

Fig. 5 zeigt eine ähnliche Vorrichtung wie Fig. 4, jedoch mit verschwenkter Antriebsrolle 6. Wiederum ist im Maschinengestell 1 bzw. in einer Seitenplatte 32 eine Ausnehmung 34 vorgesehen, die durch eine Öffnung 22 radial nach außen geöffnet ist. Die Lagervorrichtung 11 weist ein Verriegelungselement 24 auf, welches in einer Stellung durch die Öffnung 22 hindurchgeführt werden kann, in einer weiteren Stellung jedoch arretiert ist. Dazu ist, wie bereits erwähnt, durch Drehung des Verriegelungselements 24 ein Hindurchführen durch die Öffnung 22 ermöglicht. In der Darstellung der Fig. 5 ist das Verriegelungselement wieder in die Grundstellung zurückgedreht, in der das Einführen in die dafür vorgesehene Lagerstelle verhindert ist. Um die Antriebsrolle 6 in Betriebsposition zu bringen, müsste das Verriegelungselement 24 um 90° verdreht werden, die gesamte Anordnung durch die Öffnung 22 hindurchgeführt oder geschwenkt werden und in weiterer Folge das Verriegelungselement 24 wieder um 90° zurückgedreht werden, um eine Arretierung zu bewirken. Das Verriegelungselement, das Radiallager und der zugehörige Lagerbock bleiben bei der Verschwenkung mit der Antriebsrolle verbunden und werden mitgeschwenkt.

Über die Blockiervorrichtung 35 kann eine selbsttätige Verdrehung des Verriegelungselements 24 verhindert werden.

In Fig. 4 und 5 ist zur Drehung und Betätigung der Lagervorrichtung 11 jeweils ein Betätigungselement 26 vorgesehen. Dieses ist, wie oben erwähnt, als bügelförmiger Griff ausgebildet. Dadurch ist in vorteilhafter Weise zur Demontage oder Verschwenkung der Antriebsrolle 6 kein Werkzeug notwendig.

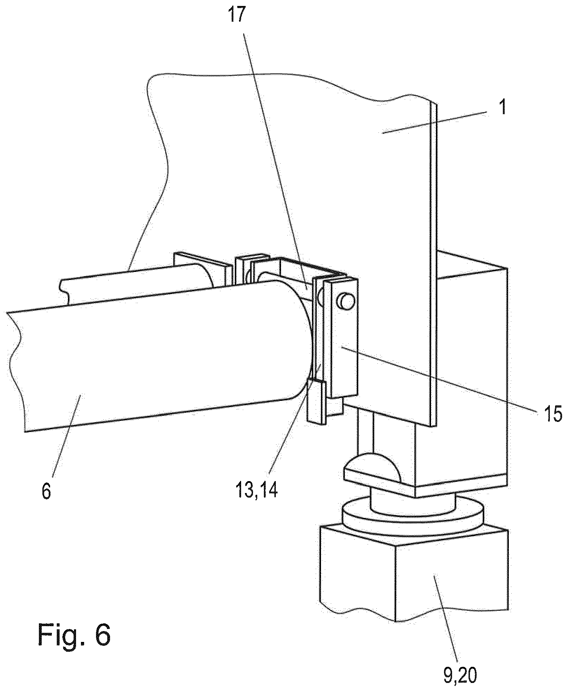

Fig. 6 zeigt einen Detailausschnitt einer Schrägansicht zur detaillierten Beschreibung des Schwenklagers 13. Die Antriebsrolle 6 ist an der zweiten Lagerstelle 14 im Maschinengestell 1 gelagert. Dazu ist ein Radiallager 16 vorgesehen, das insbesondere in einem Schwenklagerbock 15 angeordnet ist. Der Schwenklagerbock 15 ist über eine Schwenkachse 17 mit dem Maschinengestell 1 verbunden. Bei Verschwenkung der Antriebsrolle 6 wird somit der Schwenklagerbock 15 mit dem darin angeordneten Radiallager 16 gegenüber dem Maschinengestell 1 verschwenkt und insbesondere um die Schwenkachse 17 gedreht. Ferner ist ein Antrieb 9 vorgesehen, der dazu eingerichtet ist, die Antriebsrolle 6 rotatorisch anzutreiben. Dazu weist der Antrieb 9 ein Gehäuse 20 auf. Der Antrieb ist mit dem Schwenklagerbock 15 verbunden. Bei Verschwenkung der Antriebsrolle 6 werden somit auch der Antrieb 9 und das Gehäuse 20 des Antriebs 9 mitgeschwenkt. Dies hat den Vorteil, dass der Antrieb zur Entfernung des Transportbandes nicht von der Antriebsrolle getrennt werden muss.

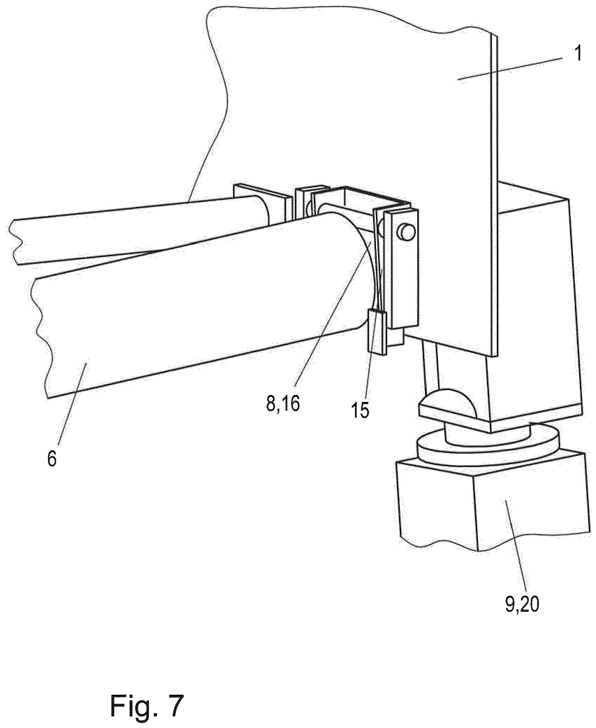

Fig. 7 zeigt die Anordnung aus Fig. 6, jedoch mit verschwenkter Antriebsrolle 6. Dabei sind die Antriebsrolle 6, die in dem Radiallager 16 gelagerte Antriebswelle 8, der Schwenklagerbock 15 sowie der Antrieb 9 samt Gehäuse 20 um die Schwenkachse 17 verschwenkt. Auch hier ist ein im Wesentlichen fester Verbund zwischen den genannten Komponenten hergestellt. Lediglich die Verdrehung der Antriebsrolle 6 gegenüber dem Maschinengestell 1 sowie die Verschwenkbarkeit um die Schwenkachse 17 sind ermöglicht. Auch die Verdrehung der Antriebswelle 8 und der bewegten Teile des Antriebs 9 sind nicht blockiert.

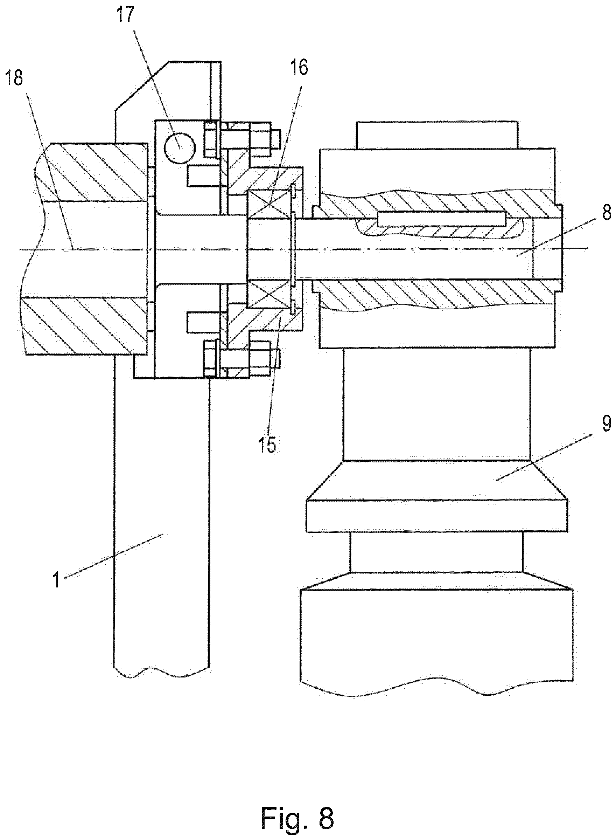

Fig. 8 zeigt eine Schnittdarstellung des Details aus Fig. 6, wobei sich die Antriebsrolle 6 in einer normalen Betriebsstellung befindet. Die Antriebsrolle 6 bzw. deren Drehachse 18 verläuft dabei beispielsweise im Wesentlichen waagrecht.

Der Antrieb 9 treibt die Antriebswelle 8 rotatorisch an. Diese verläuft koaxial mit der Antriebsrolle 6. Gegebenenfalls ist die Antriebswelle 8 ein Teil der Antriebsrolle 6. Die Antriebswelle 8 bzw. die Antriebsrolle 6 sind über ein Radiallager 16 gegenüber dem Maschinengestell 1 gelagert. Das Radiallager 16 ist insbesondere in dem Schwenklagerbock 15 gehaltert. Der Schwenklagerbock 15 ist über eine Schwenkachse 17 gegenüber dem Maschinengestell 1 schwenkbar. Analog zur Beschreibung der vorangegangenen Figuren ist dadurch die Verschwenkbarkeit der Antriebsrolle 6 ermöglicht.

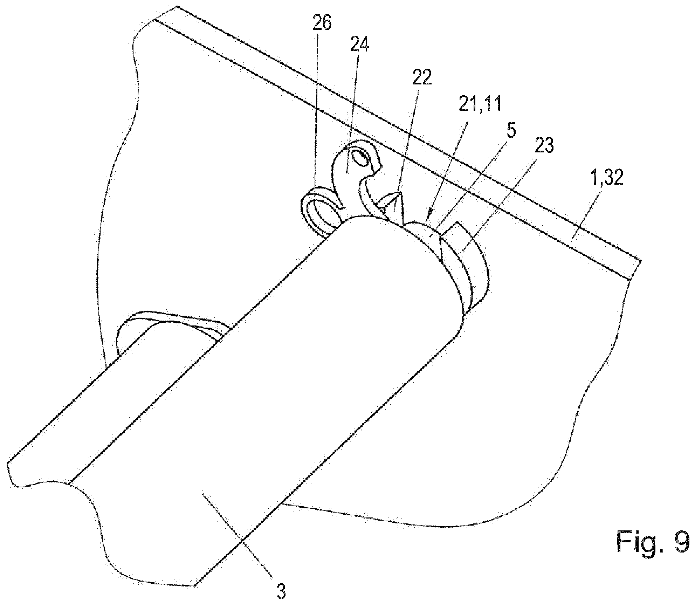

Fig. 9 zeigt eine Schrägansicht eines Details einer Umlenkrolle 3. Diese ist seitlich in dem Maschinengestell 1 und insbesondere an einer Seitenplatte 32 gelagert. Dazu ist bei der Lagerstelle 21 eine lösbare Lagervorrichtung 11 vorgesehen. Diese umfasst einen Umlenkrollenlagerbock 23 sowie ein Verriegelungselement 24. Am Verriegelungselement 24 ist bevorzugt ein Betätigungselement 26 vorgesehen. Der Umlenkrollenlagerbock 23 umfasst eine Öffnung 22. Durch diese kann die Umlenkachse 5 der Umlenkrolle 3 aus dem Umlenkrollenlagerbock 23 entfernt werden. Zur Verriegelung und Fixierung der Umlenkrolle 3 kann der Umlenkrollenlagerbock 23 über das Verriegelungselement 24 geschlossen werden. Bei geschlossenem Verriegelungselement ist eine Drehung der Umlenkrolle 3 um deren Mittellängsachse möglich. Ein Entfernen der Rolle ist jedoch verhindert. Bei geöffnetem Verriegelungselement 24 ist eine Entnahme der Umlenkrolle 3 ermöglicht. Fig. 9 zeigt die geöffnete Stellung des Umlenkrollenlagerbocks 23.

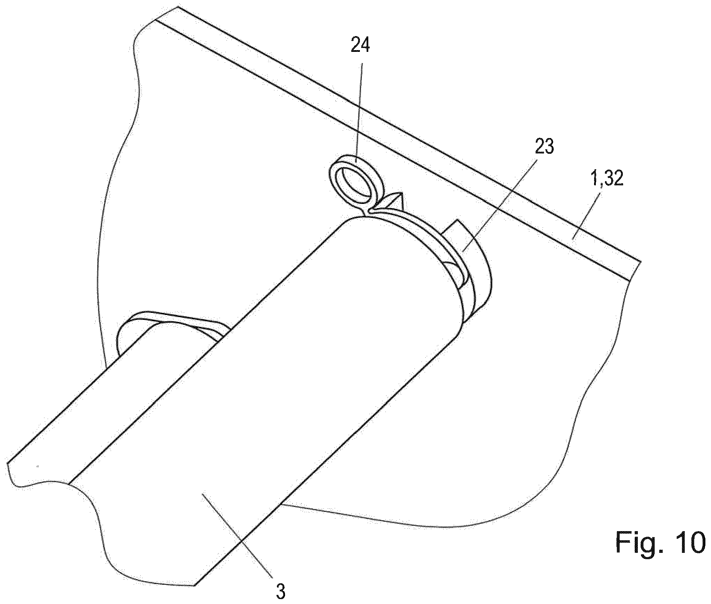

Fig. 10 zeigt dieselbe Anordnung, jedoch ist in dieser Darstellung der Umlenkrollenlagerbock 23 durch das Verriegelungselement 24 verriegelt. Somit ist die Umlenkrolle 3 bzw. deren Achse rotatorisch gelagert und relativ zum Maschinengestell 1 fixiert.

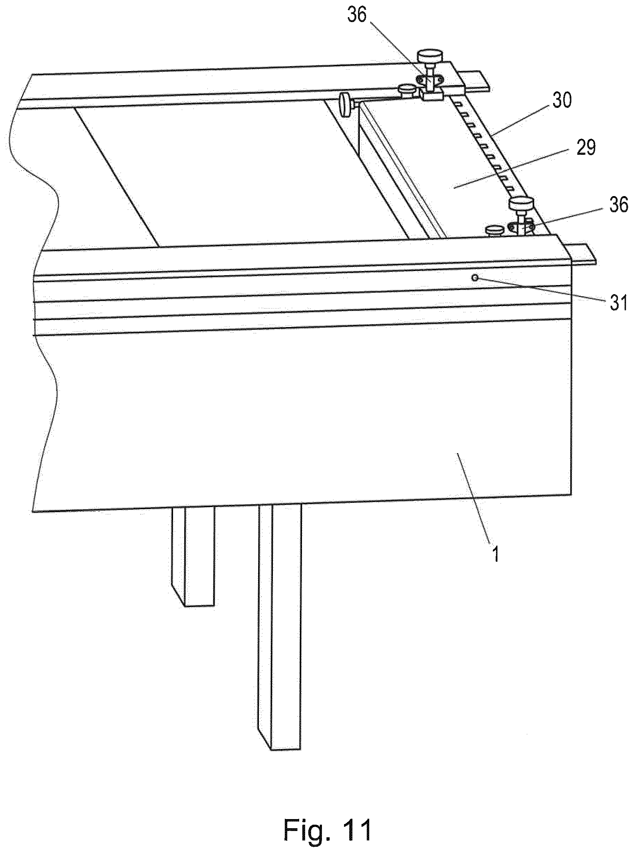

Fig. 11 zeigt eine weitere Ansicht der erfindungsgemäßen Vorrichtung. Das Transportband ist in dieser Ansicht ausgeblendet, um die Funktionsweise des Übergabemessers 29 beschreiben zu können. Dieses ist mit dem Maschinengestell 1 verbunden. In Fig. 11 ist das Übergabemesser in Betriebsposition dargestellt. Die obere Fläche folgt im Wesentlichen der Transportrichtung des Transportbandes. Über Verbindungselemente 36, die beispielsweise als Knebelschraube ausgeführt sind, ist das Übergabemesser 29 in einer Position fixiert. Das Übergabemesser 29 weist eine Übergabekante 30 auf. Über diese Übergabekante 30 wird das Transportband 2 gegebenenfalls scharf umgelenkt, um eine Übergabe von im Wesentlichen biegeschlaffen Formkörpern zu ermöglichen. Bei gelösten Verbindungselementen 36 ist das Übergabemesser 29 um eine Übergabemesserschwenkachse 31 schwenkbar.

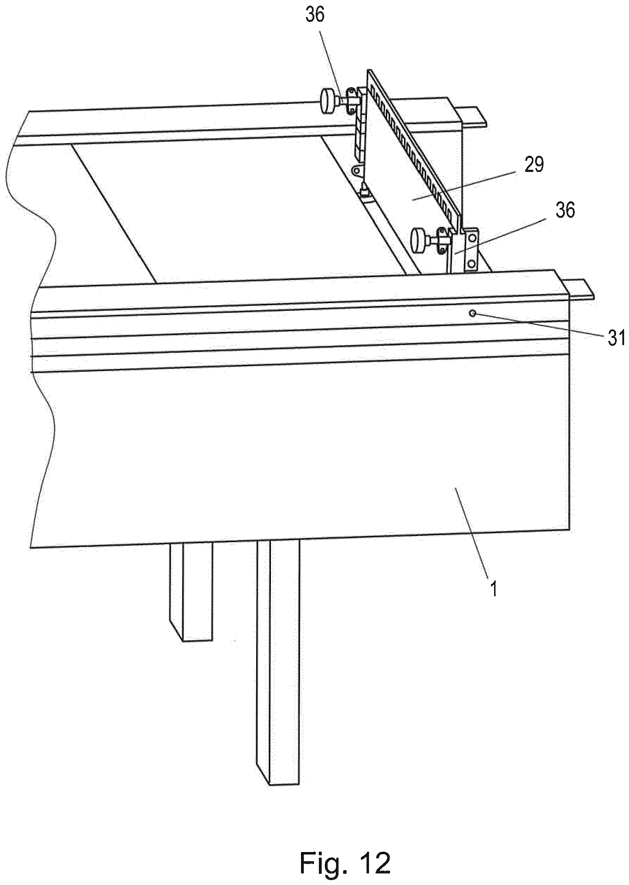

Fig. 12 zeigt das Übergabemesser 29 in aufgestellter Stellung. Dabei ist das Übergabemesser 29 gegenüber der Stellung aus Fig. 11 um etwa 90° um die Übergabemesserschwenkachse 31 gedreht. Die Verbindungselemente 36 sind dabei gelöst, sodass keine Fixierung am Maschinengestell 1 gegeben ist. Durch diese Konfiguration ist das Transportband 2, das in dieser Darstellung nicht eingezeichnet ist, entspannt.

Eine Entnahme des Übergabemessers 29 ist ermöglicht. Gegebenenfalls sind weitere Verbindungselemente 36 zur Fixierung des Übergabemessers 29 am Maschinengestell 1 vorhanden, die gelöst werden müssen, um das Übergabemesser 29 entfernen zu können.

### Bezugszeichenliste

1. Maschinengestell
2. Transportband
3. Umlenkrolle
4. Innenseite des Transportbandes
5. Umlenkachse
6. Antriebsrolle
7. -
8. Antriebswelle
9. Antrieb
10. Schwenkvorrichtung
11. Lagervorrichtung
12. Erste Lagerstelle (Antriebswelle)
13. Schwenklager
14. Zweite Lagerstelle (Schwenklager)
15. Schwenklagerbock
16. Radiallager
17. Schwenkachse
18. Drehachse
20. Gehäuse
21. Lagerstelle Umlenkrolle
22. Öffnung
23. Umlenkrollenlagerbock
24. Verriegelungselement
25. Breite
26. Betätigungselement
27. Spannrolle
28. Außenseite des Transportbandes
29. Übergabemesser
30. Übergabekante
31. Übergabemesserschwenkachse
32. Seitenplatte
33. Transportrichtung
34. Ausnehmung
35. Blockiervorrichtung
36. Verbindungselement
37. Tischbleche

## Patentansprüche

1. Vorrichtung zum Transport von endlosen Teigbändern oder im Wesentlichen biegeschlaffen Formkörpern, wie insbesondere Keksteig-Formkörper und dergleichen, umfassend:
- ein Maschinengestell (1),
- ein geschlossenes, umlaufendes Transportband (2),
- zumindest eine Umlenkrolle (3), welche das Transportband (2) zur Umlenkung auf der Innenseite (4) berührt und deren Umlenkachse (5) seitlich am Maschinengestell (1) rotatorisch gelagert ist,
- einen Antrieb (9), welcher ein Gehäuse (20) umfasst,
- eine Antriebsrolle (6), welche das Transportband (2) zum Antrieb auf der Innenseite (4) berührt und deren Antriebswelle (8) seitlich am Maschinengestell (1) rotatorisch gelagert und von dem Antrieb (9) angetrieben ist,
**dadurch gekennzeichnet, dass**
die Umlenkrolle(n) (3) über als lösbare Lagervorrichtungen (11) ausgeführte Schnellverschlüsse entriegelbar und entfernbar ist oder sind,
und dass die Antriebsrolle (6), der Antrieb (9) und das Gehäuse (20) des Antriebs (9) über eine Schwenkvorrichtung (10) mit dem Maschinengestell (1) verbunden sind.

2. Vorrichtung nach Anspruch 1, **dadurch gekennzeichnet, dass** die Schwenkvorrichtung (10)
- eine lösbare Lagervorrichtung (11) für die erste Lagerstelle (12) der Antriebswelle (8) und
- ein schwenkbares Schwenklager (13) für die zweite Lagerstelle (14) der Antriebswelle (8) im Maschinengestell (1) umfasst,
- sodass ein Schwenken der Antriebswelle (8) und der Antriebsrolle (6) gegenüber dem Maschinengestell (1) ermöglicht ist.

3. Vorrichtung nach einem der Anspruch 2, **dadurch gekennzeichnet, dass** das Schwenklager (13) einen Schwenklagerbock (15) umfasst, in welchem ein Radiallager (16) zur Lagerung der Antriebswelle (8) vorgesehen ist,
und dass das Schwenklager (13) über eine Schwenkachse (17) mit dem Maschinengestell (1) verbunden ist, sodass der Schwenklagerbock (15) und die darin gelagerte Antriebswelle (8) schwenkbar sind.

4. Vorrichtung nach Anspruch 3, **dadurch gekennzeichnet, dass** die Richtung der Schwenkachse (17) von der Richtung der Drehachse (18) der Antriebswelle (8) abweicht und insbesondere im Wesentlichen normal zur Drehachse (18) der Antriebswelle (8) verläuft.

5. Vorrichtung nach einem der Ansprüche 1 bis 4, **dadurch gekennzeichnet, dass** der Antrieb (9) eine Ausgangswelle umfasst, die mit der Antriebswelle (8) drehverbunden ist und dass der Antrieb (9) ein Gehäuse (20) umfasst, das im Wesentlichen starr mit dem Schwenklagerbock (15) verbunden ist.

6. Vorrichtung nach einem der Ansprüche 1 bis 5, **dadurch gekennzeichnet, dass** die Lagerstellen (21) der Umlenkrolle (3) jeweils als lösbare Lagervorrichtungen (11) ausgeführt sind.

7. Vorrichtung nach einem der Ansprüche 1 bis 6, **dadurch gekennzeichnet, dass** die lösbare Lagervorrichtung (11) der Umlenkrolle (3) einen Umlenkrollenlagerbock (23) und ein Verriegelungselement (24) umfasst,
wobei der Umlenkrollenlagerbock (23) eine im Wesentlichen in radialer Richtung verlaufende Öffnung (22) zum Einlegen und Entfernen der Umlenkachse (5) aufweist, die durch das Verriegelungselement (24) verschließbar ist.

8. Vorrichtung nach Anspruch 7, **dadurch gekennzeichnet, dass** die Breite (25) der Öffnung (22) des Umlenkrollenlagerbocks (23) größer ist als der Durchmesser der gelagerten Umlenkachse (5).

9. Vorrichtung nach Anspruch 7 oder 8, **dadurch gekennzeichnet, dass** das Verriegelungselement (24) über ein Betätigungselement (26) bewegbar ist, wobei das Betätigungselement (26) insbesondere als werkzeuglos bedienbares Betätigungselement, als Hebel, als Riegel oder als Schieber ausgeführt ist.

10. Vorrichtung nach einem der Ansprüche 1 bis 9, **dadurch gekennzeichnet, dass** eine Spannrolle (27) vorgesehen ist, die zur Spannung des Transportbandes (2) an die Außenseite (28) des Transportbandes (2) gedrückt ist.

11. Vorrichtung nach einem der Ansprüche 1 bis 10, **dadurch gekennzeichnet, dass** ein Übergabemesser (29) vorgesehen ist, das eine Übergabekante (30) aufweist, um die das Transportband (2) umgelenkt ist.

12. Vorrichtung nach Anspruch 11, **dadurch gekennzeichnet, dass** das Übergabemesser (29) über eine Übergabemesserschwenkachse (31) schwenkbar mit dem Maschinengestell (1) verbunden ist.

13. Vorrichtung nach einem der Ansprüche 11 oder 12, **dadurch gekennzeichnet, dass** das Übergabemesser (29) seitlich mit dem Maschinengestell (1) verbunden ist, wobei die Verbindung lösbar ausgeführt ist, sodass das Übergabemesser entfernbar ist.

14. Vorrichtung nach einem der Ansprüche 11 bis 13 **dadurch gekennzeichnet, dass** alle Umlenkrollen und das Übergabemesser (29) und gegebenenfalls Tischbleche (37) entfernbar mit dem Maschinengestell (1) verbunden sind und dass die Antriebsrolle (6) schwenkbar mit dem Maschinengestell (1) verbunden ist, sodass das endlose, geschlossene Transportband ohne Demontage des Antriebs wechselbar ist.

15. Vorrichtung nach Anspruch 7 bis 14, **dadurch gekennzeichnet, dass** die lösbare Lagervorrichtung (11) der Antriebsrolle (6) eine Ausnehmung (34) in der Seitenplatte (32) des Maschinengestells (1) umfasst, die über eine radial verlaufende Öffnung (22) nach außen geöffnet ist,
dass das Verriegelungselement (24) der Antriebsrolle (6) drehbar angeordnet ist, dass eine Breite des Verriegelungselements (24) kleiner ist als die Breite der Öffnung (22) und dass eine weitere Breite des Verriegelungselements (24) breiter ist als die Öffnung (22) jedoch kleiner als die Ausnehmung (34), sodass das Verriegelungselement (24) in der Ausnehmung (34) positionierbar und durch Verdrehen arretierbar ist.

16. Vorrichtung nach einem der vorangegangenen Ansprüche, **dadurch gekennzeichnet, dass** die Antriebsrolle (6), deren in dem Radiallager (16) gelagerte Antriebswelle (8), der Schwenklagerbock (15) sowie der Antrieb (9) samt Gehäuse (20) über die Schwenkachse (17) schwenkbar gegenüber dem Maschinengestell angeordnet sind.

## Claims

1. A device for transporting continuous dough sheets or substantially pliable shaped bodies, such as cookie dough shaped bodies and the like in particular, comprising:
- a machine frame (1),
- a closed, circulating conveyor belt (2),
- at least one deflection roller (3) which makes contact with the conveyor belt (2) for deflection on the inside (4) and the deflection axis (5) thereof is rotationally mounted laterally on the machine frame (1),
- a drive (9) which comprises a housing (20),
- a drive roller (6) which makes contact with the conveyor belt (2) for driving on the inside (4) and the drive shaft (8) thereof is rotationally mounted laterally on the machine frame (1) and driven by the drive (9),
**characterized in that**
the deflection roller(s) (3) can be unlocked and removed via quick-action closures configured as detachable bearing devices (11)
and that the drive roller (6), the drive (9) and the housing (20) of the drive (9) are connected to the machine frame (1) via a pivoting device (10).

2. The device according to claim 1, **characterized in that** the pivoting device (10) comprises
- a detachable bearing device (11) for the first bearing point (12) of the drive shaft (8) and
- a pivotable pivot bearing (13) for the second bearing point (14) of the drive shaft (8) in the machine frame (1),
- so that pivoting of the drive shaft (8) and of the drive roller (6) with respect to the machine frame (1) is made possible.

3. The device according to claim 2, **characterized in that** the pivot bearing (13) comprises a pivot bearing pedestal (15) in which a radial bearing (16) is provided for the bearing of the drive shaft (8) and that the pivot bearing (13) is connected to the machine frame (1) via a pivot axis (17), so that the pivot bearing pedestal (15) and the drive shaft (8) mounted therein are pivotable.

4. The device according to claim 3, **characterized in that** the direction of the pivot axis (17) deviates from the direction of the axis of rotation (18) of the drive shaft (8) and, in particular, runs substantially perpendicularly to the axis of rotation (18) of the drive shaft (8).

5. The device according to one of claims 1 to 4, **characterized in that** the drive (9) comprises an output shaft which is rotationally connected to the drive shaft (8) and that the drive (9) comprises a housing (20) which is connected substantially rigidly to the pivot bearing pedestal (15).

6. The device according to one of claims 1 to 5, **characterized in that** the bearing points (21) of the deflection roller (3) are each configured as detachable bearing devices (11).

7. The device according to one of claims 1 to 6, **characterized in that** the detachable bearing device (11) of the deflection roller (3) comprises a deflection roller bearing pedestal (23) and a locking element (24), wherein the deflection roller bearing pedestal (23) has an opening (22) running substantially in a radial direction for inserting and removing the deflection axis (5), which opening can be closed by the locking element (24).

8. The device according to claim 7, **characterized in that** the width (25) of the opening (22) of the deflection roller bearing pedestal (23) is greater than the diameter of the mounted deflection axis (5).

9. The device according to claim 7 or 8, **characterized in that** the locking element (24) is movable via an actuating element (26), wherein the actuating element (26) is particularly configured as an actuating element that can be operated without tools, as a lever, as a bolt or as a slide.

10. The device according to one of claims 1 to 9, **characterized in that** a tensioning roller (27) is provided which is pressed to the outside (28) of the conveyor belt (2) to tension the conveyor belt (2).

11. The device according to one of claims 1 to 10, **characterized in that** a delivery blade (29) is provided which has a delivery edge (30) about which the transport belt (2) is deflected.

12. The device according to claim 11, **characterized in that** the delivery blade (29) is pivotably connected via a delivery blade pivot axis (31) to the machine frame (1).

13. The device according to one of claims 11 or 12, **characterized in that** the delivery blade (29) is laterally connected to the machine frame (1), wherein the connection is detachably configured, so that the delivery blade can be removed.

14. The device according to one of claims 11 to 13, **characterized in that** all deflection rollers and the delivery blade (29) and possibly table sheets (37) are removably connected to the machine frame (1) and that the drive roller (6) is pivotably connected to the machine frame (1), so that the continuous, closed conveyor belt can be replaced without dismantling the drive.

15. The device according to claim 7 to 14, **characterized in that** the detachable bearing device (11) of the drive roller (6) comprises a recess (34) in the side plate (32) of the machine frame (1) which is outwardly opened via a radially running opening (22),
that the locking element (24) of the drive roller (6) is arranged rotatably, that a width of the locking element (24) is smaller than the width of the opening (22) and that another width of the locking element (24) is wider than the opening (22) but smaller than the recess (34), so that the locking element (24) can be positioned in the recess (34) and locked by turning.

16. The device according to one of the preceding claims, **characterized in that** the drive roller (6), the drive shaft (8) thereof mounted in the radial bearing (16), the pivot bearing pedestal (15) and also the drive (9) along with the housing (20) are pivotably arranged via the pivot axis (17) with respect to the machine frame.

## Revendications

1. Dispositif pour le transport de bandes de pâte sans fin ou pour l'essentiel de corps moulés souples, comme en particulier des corps moulés de pâte à biscuits et produits analogues, comprenant :
- un châssis de machine (1),
- une bande transporteuse (2) fermée et en circulation,
- au moins un rouleau de renvoi (3), lequel touche la bande transporteuse (2) pour le renvoi sur le côté intérieur (4) et dont l'axe de renvoi (5) est logé latéralement en rotation sur le châssis de machine (1),
- un entraînement (9), lequel comprend un boîtier (20),
- un rouleau d'entraînement (6), lequel touche la bande transporteuse (2) pour entraînement sur le côté intérieur (4) et dont l'arbre d'entraînement (8) est logé en rotation latéralement sur le châssis de machine (1) et est entraîné par l'entraînement (9),
**caractérisé en ce que**
le(s) rouleau(x) de renvoi (3) peut(vent) être déverrouillé(s) et enlevé(s) par le biais de fermetures rapides exécutées comme des dispositifs d'appui amovibles (11),
et **en ce que** le rouleau d'entraînement (6), l'entraînement (9) et le boîtier (20) de l'entraînement (9) sont reliés au châssis de machine (1) par le biais d'un dispositif pivotant (10).

2. Dispositif selon la revendication 1, **caractérisé en ce que** le dispositif pivotant (10) comprend
- un dispositif d'appui amovible (11) pour le premier point d'appui (12) de l'arbre d'entraînement (8) et
- un palier pivotant (13) pivotable pour le deuxième point d'appui (14) de l'arbre d'entraînement (8) dans le châssis de machine (1),
- de sorte qu'un pivotement de l'arbre d'entraînement (8) et du rouleau d'entraînement (6) est possible par rapport au châssis de machine (1).

3. Dispositif selon la revendication 2, **caractérisé en ce que** le palier pivotant (13) comprend un support de palier pivotant (15) dans lequel est prévu un palier radial (16) pour loger l'arbre d'entraînement (8) et **en ce que** le palier pivotant (13) est relié au châssis de machine (1) par le biais d'un axe de pivotement (17) de sorte que le support de palier pivotant (15) et l'arbre d'entraînement (8) logé dedans sont pivotables.

4. Dispositif selon la revendication 3, **caractérisé en ce que** la direction de l'axe de pivotement (17) s'écarte de la direction de l'axe de rotation (18) de l'arbre d'entraînement (8) et passe en particulier pour l'essentiel perpendiculairement à l'axe de rotation (18) de l'arbre d'entraînement (8).

5. Dispositif selon l'une quelconque des revendications 1 à 4, **caractérisé en ce que** l'entraînement (9) comprend un arbre de sortie qui est relié en rotation à l'arbre d'entraînement (8) et **en ce que** l'entraînement (9) comprend un boîtier (20) qui est fixement relié pour l'essentiel au support de palier pivotant (15).

6. Dispositif selon l'une quelconque des revendications 1 à 5, **caractérisé en ce que** les points d'appui (21) du rouleau de renvoi (3) sont respectivement exécutés comme des dispositifs d'appui amovibles (11).

7. Dispositif selon l'une quelconque des revendications 1 à 6, **caractérisé en ce que** le dispositif d'appui amovible (11) du rouleau de renvoi (3) comprend un support de palier de rouleau de renvoi (23) et un élément de verrouillage (24), le support de palier de rouleau de renvoi (23) comportant une ouverture (22) passant pour l'essentiel en direction radiale pour introduire et enlever l'axe de renvoi (5), qui peut être fermé par l'élément de verrouillage (24).

8. Dispositif selon la revendication 7, **caractérisé en ce que** la largeur (25) de l'ouverture (22) du support de palier de rouleau de renvoi (23) est plus grande que le diamètre de l'axe de renvoi logé (5).

9. Dispositif selon la revendication 7 ou 8, **caractérisé en ce que** l'élément de verrouillage (24) peut être mobile par le biais d'un élément de commande (26), l'élément de commande (26) étant exécuté en particulier comme élément de commande actionnable sans outil, comme levier, comme verrou ou comme coulisseau.

10. Dispositif selon l'une quelconque des revendications 1 à 9, **caractérisé en ce qu'**un rouleau tendeur (27) est prévu qui est appuyé sur le côté extérieur (28) de la bande transporteuse (2) pour tendre la bande transporteuse (2).

11. Dispositif selon l'une quelconque des revendications 1 à 10, **caractérisé en ce qu'**une lame de transfert (29) est prévue, qui comporte un bord de transfert (30) autour duquel la bande transporteuse (2) est renvoyée.

12. Dispositif selon la revendication 11, **caractérisé en ce que** la lame de transfert (29) est reliée au châssis de machine (1) pouvant pivoter par le biais d'un axe de pivotement de lame de transfert (31).

13. Dispositif selon l'une quelconque des revendications 11 ou 12, **caractérisé en ce que** la lame de transfert (29) est reliée latéralement au châssis de machine (1), la liaison étant exécutée amovible de sorte que la lame de transfert peut être enlevée.

14. Dispositif selon l'une quelconque des revendications 11 à 13, **caractérisé en ce que** tous les rouleaux de renvoi et la lame de transfert (29) et le cas échéant les tôles de table (37) sont reliés amovibles au châssis de machine (1) et **en ce que** le rouleau d'entraînement (6) est relié pouvant pivoter au châssis de machine (1) de sorte que la bande transporteuse sans fin fermée peut être changée sans démontage du système d'entraînement.

15. Dispositif selon l'une quelconque des revendications 7 à 14, **caractérisé en ce que** le dispositif d'appui amovible (11) du rouleau d'entraînement (6) comprend un évidement (34) dans la plaque latérale (32) du châssis de machine (1) qui est ouvert vers l'extérieur par le biais d'une ouverture passant radialement (22),
**en ce que** l'élément de verrouillage (24) du rouleau d'entraînement (6) est disposé pouvant tourner, **en ce qu'**une largeur de l'élément de verrouillage (24) est plus petite que la largeur de l'ouverture (22) et **en ce qu'**une autre largeur de l'élément de verrouillage (24) est plus large que l'ouverture (22), mais toutefois plus petite que l'évidement (34) de sorte que l'élément de verrouillage (24) peut être positionné et bloqué par rotation dans l'évidement (34).

16. Dispositif selon l'une quelconque des revendications précédentes, **caractérisé en ce que** le rouleau d'entraînement (6), son arbre d'entraînement (8) logé dans le palier radial (16), le support de palier pivotant (15) ainsi que l'entraînement (9) avec le boîtier (20) sont disposés pouvant pivoter par rapport au châssis de machine par le biais de l'axe de pivotement (17).
